# EUROPEAN PATENT APPLICATION

(11) **EP 4 811 166 A1**
(43) Date of publication of application: **23.09.2026**
(21) Application number: 26161541.3
(22) Date of filing: 02.03.2026
(51) Int. Cl.: G06F 16/3329, G06F 16/335

(54) **INFORMATION PROCESSING APPARATUS, INFORMATION PROCESSING METHOD, CARRIER MEANS, AND INFORMATION PROCESSING SYSTEM**

(30) Priority: 17.03.2025 JP 2025042207
(71) Applicant: Ricoh Company, Ltd., Tokyo 143-8555 (JP)
(72) Inventor: KITAGAWA, Koya, Tokyo, 143-8555 (JP); AIBA, Akihito, Tokyo, 143-8555 (JP)
(74) Representative: SSM Sandmair

(57) **Abstract**

An information processing apparatus includes an input reception unit (201, 261) to receive input of input data input by a user via a terminal apparatus, and an output unit (201, 266) to output response data according to attribute information of the user by using the attribute information. The attribute information being acquired based on the input data and communication history information associated with the user.

## Description

### BACKGROUND

### Technical Field

The present disclosure relates to an information processing apparatus, an information processing method, a carrier means, and an information processing system.

### Related Art

There is a technology for generating an answer in response to a user inputting a question, by referring, using a search model, to a sentence corresponding to the question input by the user. There is also a technology for converting a question of a user into a specific question by generative artificial intelligence (AI) when the question of the user is abstract (e.g., Japanese Patent No. 7564400).

The technologies described above do not take into account user-specific attributes, thus making it difficult to output answer data corresponding to question data input by a user in accordance with the user-specific attributes.

### SUMMARY

The present disclosure described herein provides an information processing apparatus including an input reception unit to receive input of input data input by a user via a terminal apparatus, and an output unit to output response data according to attribute information of the user by using the attribute information. The attribute information being acquired based on the input data and communication history information associated with the user.

The present disclosure described herein provides an information processing method including receiving input of input data input by a user via a terminal apparatus, and outputting response data according to attribute information of the user by using the attribute information. The attribute information being acquired based on the input data and communication history information associated with the user.

The present disclosure described herein provides a carrier means carrying computer-readable codes for controlling a computer to carry out the above-described method.

The present disclosure described herein provides an information processing system including an information processing apparatus and a terminal apparatus communicably connected with the information processing apparatus via a network. The information processing apparatus includes an input reception unit to receive input of input data input by a user via the terminal apparatus, and an output unit to output response data according to attribute information of the user by using the attribute information. The attribute information being acquired based on the input data and communication history information associated with the user. The terminal apparatus includes a display control unit to cause a display unit to display the response data output from the information processing apparatus.

The present disclosure described herein provides a technique for outputting response data in accordance with user-specific attributes.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an example of a system configuration of an information processing system according to a first embodiment;
FIG. 2 is a diagram illustrating an example of a hardware configuration of an information processing apparatus according to the first embodiment;
FIG. 3 is a block diagram illustrating a hardware configuration of a terminal apparatus according to the first embodiment;
FIG. 4 is a schematic diagram illustrating functions of each apparatus included in the information processing system according to the first embodiment;
FIG. 5 is a sequence diagram illustrating a first example of an operation of the information processing system according to the first embodiment;
FIG. 6 is a sequence diagram illustrating a second example of an operation of the information processing system according to the first embodiment;
FIG. 7 is a diagram illustrating an example of a prompt generated by an attribute acquisition unit;
FIG. 8 is a diagram illustrating an example of a prompt generated by a background acquisition unit;
FIG. 9 is a diagram illustrating an example of a prompt generated by a response generation unit;
FIG. 10 is a first diagram illustrating an example display on the terminal apparatus according to the first embodiment;
FIG. 11 is a second diagram illustrating an example display on the terminal apparatus according to the first embodiment;
FIG. 12 is a diagram illustrating functions of each apparatus included in an information processing system according to a second embodiment;
FIG. 13 is a sequence diagram illustrating an operation of the information processing system according to the second embodiment;
FIG. 14 is a diagram illustrating functions of each apparatus included in an information processing system according to a third embodiment;
FIG. 15 is a sequence diagram illustrating an operation of the information processing system according to the third embodiment;
FIG. 16 is a first diagram illustrating an example display on a terminal apparatus according to the third embodiment; and
FIG. 17 is a second diagram illustrating an example display on the terminal apparatus according to the third embodiment.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

### First Embodiment

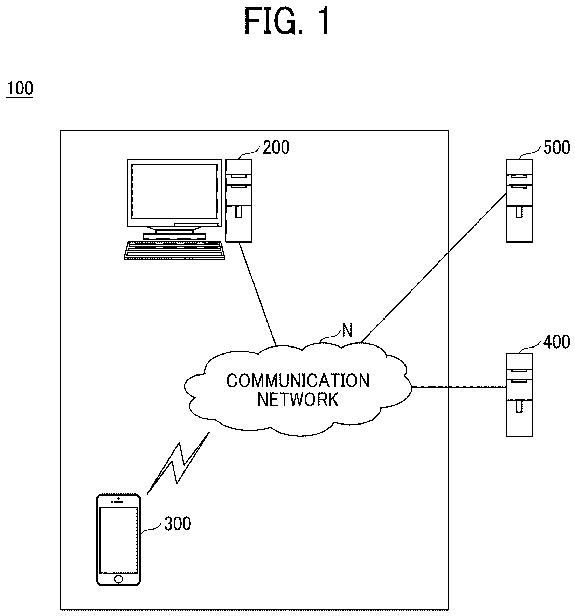

Embodiments of the present disclosure are described below with reference to the drawings. FIG. 1 is a diagram illustrating an example of a system configuration of an information processing system according to a first embodiment.

An information processing system 100 of the present embodiment includes an information processing apparatus 200 and a terminal apparatus 300. In the information processing system 100, the information processing apparatus 200 and the terminal apparatus 300 are communicably connected to each other via a communication network N. The information processing apparatus 200 also communicates with a server apparatus 400 via the communication network N.

In the present embodiment, the communication network N may be a wide area network such as the Internet or a wide area network (WAN), or may be a local area network (LAN), Wireless Fidelity (Wi-Fi^{®}), wide-area Ethernet^{®}, a mobile phone network such as a fourth-generation (4G), fifth-generation (5G), or sixth-generation (6G) mobile network, or the like.

The server apparatus 400 includes a large language model (LLM) and implements generative artificial intelligence (AI). The generative AI generates text according to a prompt being input, and outputs the generated text to the information processing apparatus 200. Chat Generative Pretrained Transformer (GPT) is one example of the generative AI. In the present embodiment, the prompt is text data that describes an instruction or a question to the generative AI implemented by the server apparatus 400. A large language model will be described in detail later.

The information processing system 100 may have any configuration as long as the information processing system 100 includes the information processing apparatus 200 and the terminal apparatus 300, and the server apparatus 400 may or may not be included in the information processing system 100.

In the information processing system 100 of the present embodiment, in response to receiving input of question data indicating a question input by a user from the terminal apparatus 300, the information processing apparatus 200 acquires answer data generated by the generative AI implemented by the server apparatus 400, and outputs the answer data to the terminal apparatus 300.

The information processing apparatus 200 stores communication history information. The communication history information is information indicating a history of communications such as conversations between the user of the terminal apparatus 300 and other parties.

The information processing apparatus 200 uses the communication history information corresponding to the user of the terminal apparatus 300 to estimate attributes of the user. In response to receiving input of question data from the terminal apparatus 300, the information processing apparatus 200 requests the server apparatus 400 to generate answer data by taking into account the user's individual background circumstances inferred from the attributes of the user. The information processing apparatus 200 outputs the answer data acquired from the server apparatus 400 to the terminal apparatus 300.

In the present embodiment, as described above, the server apparatus 400 generates answer data by taking into account the user's individual background circumstances inferred from the attributes of the user, thereby making it possible to output answer data that takes into account the user's individual circumstances attributable to the attributes of the user.

In other words, according to the present embodiment, a response generated by applying optimization in accordance with user-specific attribute information can be presented to the user in response to input from the user.

In the example illustrated in FIG. 1, the information processing apparatus 200 and the terminal apparatus 300 are separate apparatuses. However, this example is not intended to be limiting. The information processing apparatus 200 may also serve as the terminal apparatus 300. In the example illustrated in FIG. 1, the information processing apparatus 200 and the server apparatus 400 are separate apparatuses. However, this example is not intended to be limiting. The server apparatus 400 may be included in the information processing apparatus 200. In the example illustrated in FIG. 1, the information processing system 100 includes one terminal apparatus 300. However, this example is not intended to be limiting. The information processing system 100 may include any number of terminal apparatuses 300.

In FIG. 1, the information processing apparatus 200 may be implemented by one or more information processing apparatuses.

An example of a hardware configuration of each apparatus included in the information processing system 100 of the present embodiment is described below.

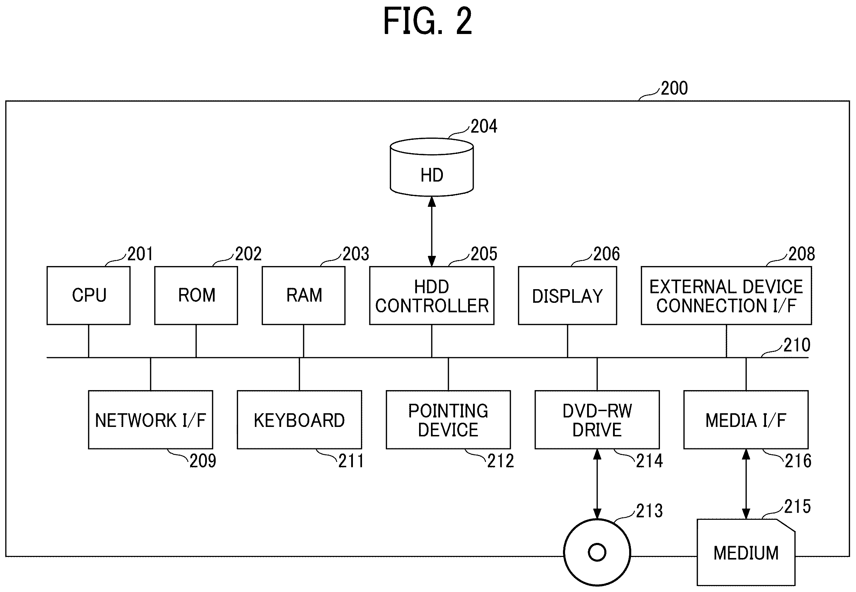

FIG. 2 is a diagram illustrating an example of a hardware configuration of the information processing apparatus 200 according to the first embodiment. The information processing apparatus 200 illustrated in FIG. 2, which is implemented by a computer, includes a central processing unit (CPU) 201, a read-only memory (ROM) 202, a random-access memory (RAM) 203, a hard disk (HD) 204, a hard disk drive (HDD) controller 205, a display 206, an external device connection interface (I/F) 208, a network I/F 209, a bus line 210, a keyboard 211, a pointing device 212, a Digital Versatile Disk Rewritable (DVD-RW) drive 214, and a media I/F 216.

The CPU 201 controls the overall operation of the information processing apparatus 200. The ROM 202 stores a program such as an initial program loader (IPL) used for booting the CPU 201. The RAM 203 is used as a work area for the CPU 201. The HD 204 stores various data such as a program. The HDD controller 205 controls reading and writing of various data from and to the HD 204 under control of the CPU 201. The display 206 displays various types of information, such as a cursor, a menu, a window, text, or an image. The external device connection I/F 208, which may be implemented by an interface circuit, is an interface for connection with various external devices. Examples of the external devices include, but are not limited to, a universal serial bus (USB) memory and a printer.

The network I/F 209, which may be implemented by an interface circuit, is an interface for data communication through a communication network. The bus line 210 is, for example, an address bus or a data bus that electrically connects the components illustrated in FIG. 2, such as the CPU 201.

The keyboard 211 is an example of an input device provided with a plurality of keys for allowing a user to input characters, numerals, or various instructions. The pointing device 212 is an example of an input device that allows selection or execution of various instructions, selection of a processing target, and movement of a cursor. The DVD-RW drive 214 controls the reading of various data from, or the writing of various data to, a DVD-RW 213, which is an example of a removable recording medium. The removable recording medium is not limited to a DVD-RW and may be, for example, a digital versatile disc recordable (DVD-R). The media I/F 216 controls the reading of data from, or the writing (storing) of data to (in), a recording medium 215 such as a flash memory.

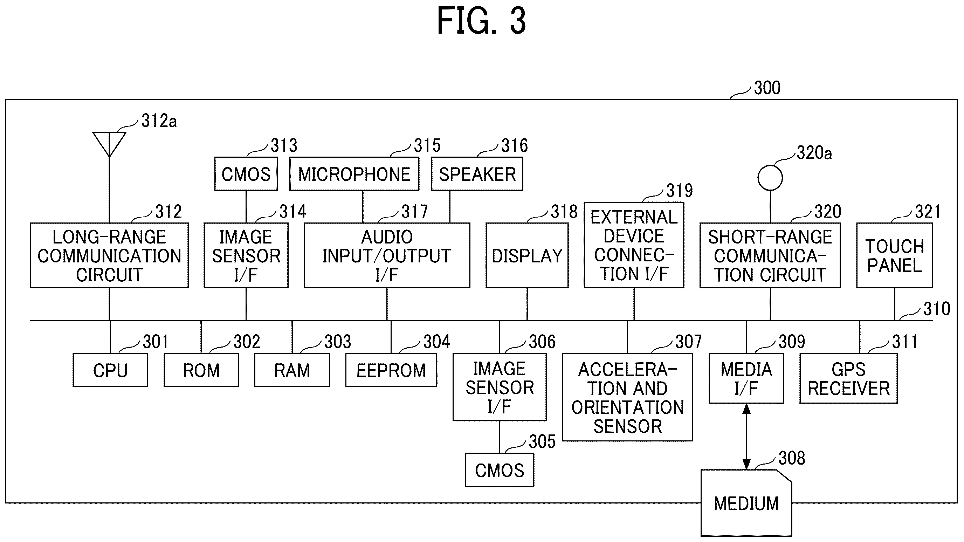

FIG. 3 is a diagram illustrating an example of a hardware configuration of the terminal apparatus 300 according to the first embodiment. The terminal apparatus 300 of the present embodiment includes a CPU 301, ROM 302, RAM 303, electrically erasable and programmable ROM (EEPROM) 304, a complementary metal oxide semiconductor (CMOS) sensor 305, an image sensor I/F 306, an acceleration and orientation sensor 307, a media I/F 309, and a global positioning system (GPS) receiver 311.

The CPU 301 is an arithmetic processing unit that controls the overall operation of the terminal apparatus 300. The ROM 302 stores a control program for controlling the CPU 301, such as an IPL. The RAM 303 is used as a work area for the CPU 301. The EEPROM 304 reads or writes various data such as a control program for a smartphone under control of the CPU 301. The ROM 302, RAM 303, and EEPROM 304 are examples of storage devices for the terminal apparatus 300.

The CMOS sensor 305, which serves as a built-in imaging means, captures an object (for example, a self-image of a user) under control of the CPU 301 to obtain image data. In alternative to the CMOS sensor 305, imaging means such as a charge-coupled device (CCD) sensor may be used.

The image sensor I/F 306 is a circuit that controls driving of the CMOS sensor 305. Examples of the acceleration and orientation sensor 307 include, but are not limited to, an electromagnetic compass or gyrocompass for detecting geomagnetism and an acceleration sensor. The media I/F 309 controls reading or writing (storing) of data from or to a storage medium 308 such as a flash memory. The GPS receiver 311 receives a GPS signal from a GPS satellite.

The terminal apparatus 300 further includes a long-range communication circuit 312, an antenna 312a for the long-range communication circuit 312, a CMOS sensor 313, an image sensor I/F 314, a microphone 315, a speaker 316, an audio input/output (I/O) I/F 317, a display 318, an external device connection I/F 319, a short-range communication circuit 320, an antenna 320a for the short-range communication circuit 320, and a touch panel 321.

The long-range communication circuit 312 is a circuit that enables the terminal apparatus 300 to communicate with other devices through the communication network. The CMOS sensor 313 serves as a built-in imaging device that captures an object under control of the CPU 301 to obtain image data. The image sensor I/F 314 is a circuit that controls driving of the CMOS sensor 313. The microphone 315 is a built-in circuit that converts sound into an electrical signal. The speaker 316 is a built-in circuit that generates sound such as music or voice by converting an electrical signal into physical vibration. The audio I/O I/F 317 is a circuit that inputs an audio signal from the microphone 315 or outputs an audio signal to the speaker 316 under control of the CPU 301.

The display 318, which serves as a display means, displays an image of the object, various icons, for example. Examples of the display 318 include a liquid crystal display (LCD) and an organic electroluminescence (EL) display. The external device connection I/F 319 is an interface circuit that connects the terminal apparatus 300 to various external devices. The short-range communication circuit 320 is a communication circuit that communicates in compliance with the near field communication (NFC), Bluetooth^{®}, for example. The touch panel 321, which serves as an input device, allows a user to operate the terminal apparatus 300 by touching a screen of the display 318. The display 318 serves as a display unit included in the terminal apparatus 300.

The hardware configuration illustrated in FIG. 3 is one example of the hardware configuration of the terminal apparatus 300, and the terminal apparatus 300 may have a hardware configuration other than that illustrated in FIG. 3. For example, the terminal apparatus 300 may have the hardware configuration illustrated in FIG. 2.

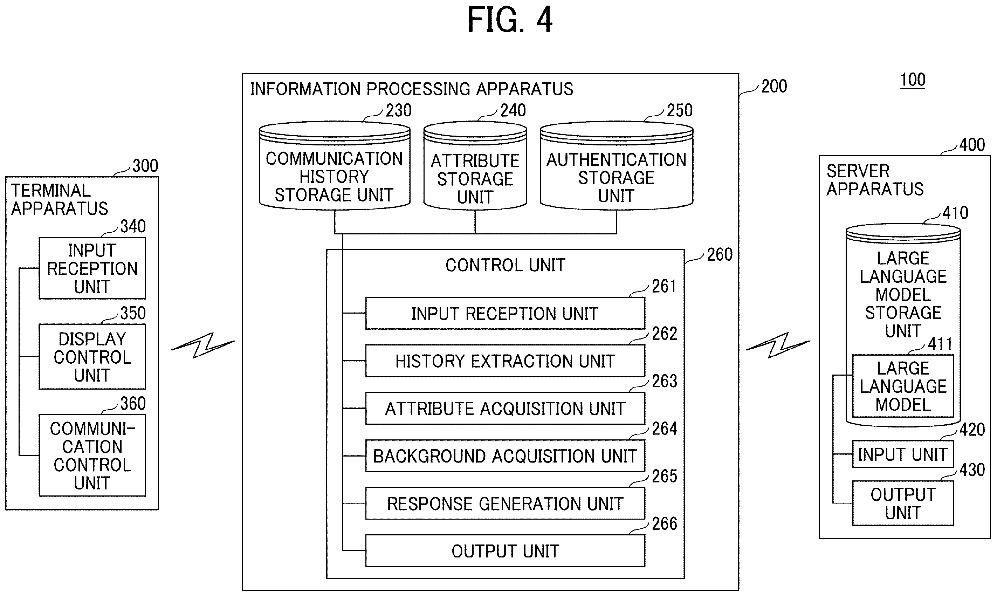

A functional configuration of each apparatus included in the information processing system 100 of the present embodiment is described below with reference to FIG. 4. FIG. 4 is a schematic diagram illustrating functions of each apparatus included in the information processing system 100 according to the first embodiment.

First, the functional configuration of the information processing apparatus 200 is described below. The information processing apparatus 200 of the present embodiment includes a communication history storage unit 230, an attribute storage unit 240, an authentication storage unit 250, and a control unit 260. The communication history storage unit 230 and the attribute storage unit 240 are implemented by the HD 204 or the like included in the information processing apparatus 200 under control of the control unit 260. The control unit 260 is implemented by the CPU 201 of the information processing apparatus 200 reading and executing a program stored in, for example, the HD 204.

The communication history storage unit 230 stores communication history information.

In the present embodiment, the communication history information includes communication information indicating content of communications and identification information for identifying a user who has made the communications. The information for identifying the user is, for example, a user identification (ID).

The communication information includes history information of, for example, chats that the user has had with other users, and e-mails transmitted and received between the user and other users. The communication information may also include, for example, information indicating a history of dialogues between the user and the generative AI implemented by the server apparatus 400, and minutes of meetings in which the user participated. The communication information may be any information shared by the user with other users.

The attribute storage unit 240 stores attribute information. The attribute information is extracted from the communication history information by processing performed by the control unit 260 described below, and is stored in the attribute storage unit 240. In the present embodiment, the attribute information is information indicating user-specific attributes based on the communication history information of the user, and includes, for example, but is not limited to, information indicating hobbies, occupations, and preferences.

The authentication storage unit 250 stores authentication information referenced when the user of the terminal apparatus 300 signs in to the information processing system 100. The authentication information stored in the authentication storage unit 250 includes, for example, user identification information (user ID) for identifying the user, and a password.

The control unit 260 includes an input reception unit 261, a history extraction unit 262, an attribute acquisition unit 263, a background acquisition unit 264, a response generation unit 265, and an output unit 266.

The input reception unit 261 receives input of various types of information for the information processing apparatus 200. Specifically, the input reception unit 261 receives input of authentication information for the user to sign in to the information processing system 100, and input of question data input by the user from the terminal apparatus 300. In the present embodiment, input of question data by the user may be input as text data or audio data. The question data input by the user is an example of input data input by the user.

The history extraction unit 262 refers to the communication history storage unit 230 and extracts communication history information associated with the user ID included in the authentication information received by the input reception unit 261.

The attribute acquisition unit 263 estimates attributes of the user of the terminal apparatus 300, based on the communication information extracted by the history extraction unit 262, and acquires attribute information of an estimation result. The background acquisition unit 264 uses the attribute information of the user, which is estimated by the attribute acquisition unit 263, to estimate the background of the user, and acquires background information of an estimation result.

The response generation unit 265 acquires, from the server apparatus 400, answer data that takes into account the background of the user, based on the background information acquired by the background acquisition unit 264 and the question data received by the input reception unit 261.

In other words, the response generation unit 265 of the present embodiment generates answer data (response data) to which specific optimization for the user is applied in accordance with the attribute information of the user, based on the attribute information of the user and the question data (input data) input by the user.

The output unit 266 outputs the answer data acquired by the response generation unit 265 to the terminal apparatus 300.

Processing performed by the attribute acquisition unit 263, the background acquisition unit 264, and the response generation unit 265 will be described with reference to sequence diagrams described below.

In the example illustrated in FIG. 4, the information processing apparatus 200 includes the communication history storage unit 230, the attribute storage unit 240, and the authentication storage unit 250. However, this example is not intended to be limiting. The communication history storage unit 230, the attribute storage unit 240, and the authentication storage unit 250 may each be provided, in part or in whole, in an external apparatus communicable with the information processing apparatus 200. In the example illustrated in FIG. 4, the information processing apparatus 200 includes the control unit 260. However, this example is not intended to be limiting. The functions of the control unit 260 may be implemented by a plurality of information processing apparatuses. In other words, the functions of the information processing apparatus 200 may be implemented by a plurality of information processing apparatuses.

The functional configuration of the terminal apparatus 300 is described below. The terminal apparatus 300 includes an input reception unit 340, a display control unit 350, and a communication control unit 360. The input reception unit 340 receives input to the terminal apparatus 300. The display control unit 350 controls display on the terminal apparatus 300. The communication control unit 360 controls communication between the terminal apparatus 300 and the information processing apparatus 200.

The input reception unit 340, the display control unit 350, and the communication control unit 360 may be implemented by a web browser included in the terminal apparatus 300 of the present embodiment, or may be implemented by means other than the web browser.

The server apparatus 400 of the present embodiment includes a large language model storage unit 410, an input unit 420, and an output unit 430. The large language model storage unit 410 stores a large language model 411 that implements generative AI.

The large language model 411 of the present embodiment is a computer language model generated by performing a learning process using vast amounts of unlabeled text as training data, and includes an artificial neural network having a large number of parameters. The large language model 411 is sufficiently trained by a method for learning context, such as next sentence prediction or a masked language model, to capture much of the syntax and meaning of human language. The next sentence prediction understands context by determining whether sentence 1 and sentence 2 are consecutive. The masked language model understands context by masking a word in a sentence and predicting the masked word from the words before and after the masked word.

The input unit 420 inputs a prompt transmitted from the information processing apparatus 200 to the large language model 411. The output unit 430 outputs (or transmits) output data output from the large language model 411 to the information processing apparatus 200. In other words, the output unit 430 transmits response data output from the large language model 411 for the prompt to the information processing apparatus 200.

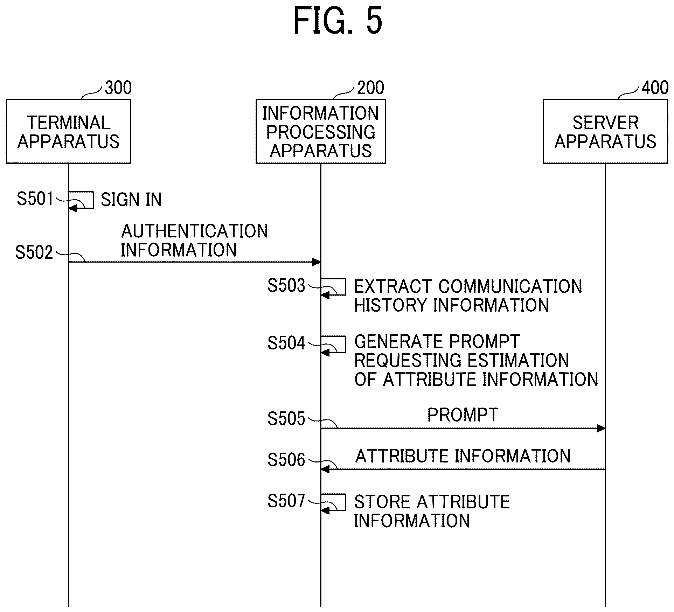

Processing performed by the attribute acquisition unit 263 is described below with reference to FIG. 5. FIG. 5 is a sequence diagram illustrating a first example of an operation of the information processing system 100 according to the first embodiment. FIG. 5 illustrates an operation of the information processing system 100 in which the attribute acquisition unit 263 acquires attribute information.

In step S501, in the information processing system 100 of the present embodiment, the input reception unit 340 of the terminal apparatus 300 receives a sign-in operation performed by the user. Specifically, the sign-in operation is an operation of inputting authentication information. In response to receipt of the sign-in operation, in step S502, the communication control unit 360 of the terminal apparatus 300 transmits the authentication information to the information processing apparatus 200.

In response to the input reception unit 261 of the information processing apparatus 200 receiving input of the authentication information of the user, in step S503, the history extraction unit 262 of the information processing apparatus 200 refers to the communication history storage unit 230 and extracts communication history information corresponding to the user ID included in the authentication information.

In step S504, the attribute acquisition unit 263 of the information processing apparatus 200 generates a prompt requesting estimation of the user's attributes based on the extracted communication history information. In step S505, the attribute acquisition unit 263 transmits the generated prompt to the server apparatus 400. Details of the prompt generated by the attribute acquisition unit 263 will be described below.

In response to receipt of the prompt generated by the attribute acquisition unit 263, in step S506, the input unit 420 of the server apparatus 400 inputs the prompt to the large language model 411, and the output unit 430 of the server apparatus 400 transmits information output from the large language model 411 and indicating an estimation result of the attributes of the user to the information processing apparatus 200.

In step S507, the attribute acquisition unit 263 of the information processing apparatus 200 acquires the information received from the server apparatus 400 as the attribute information of the user, and stores the attribute information in the attribute storage unit 240 in association with the user ID.

The processing performed by the attribute acquisition unit 263 to acquire attribute information has been described above. In the present embodiment, as described above, attribute information obtained by estimating the attributes of the user is acquired based on content of communications made by the user in the past.

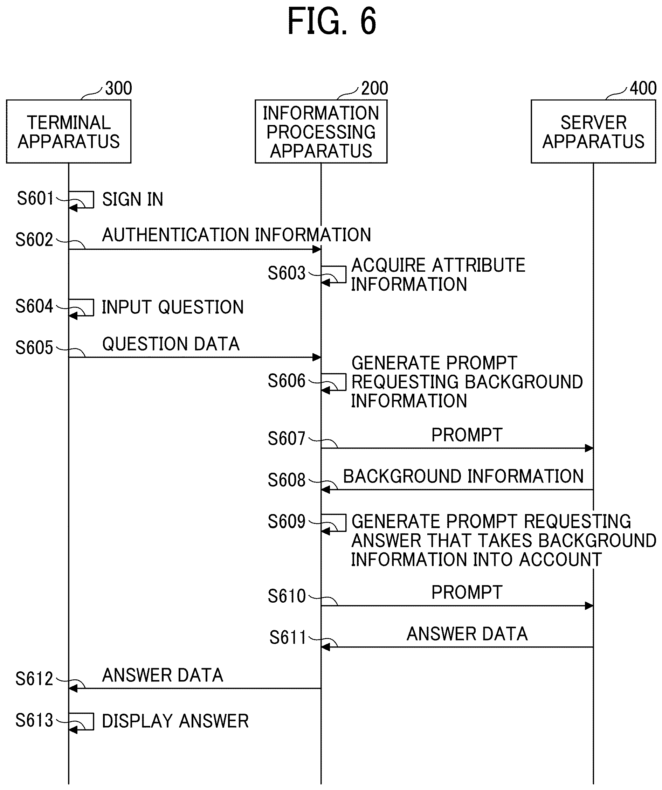

Processing performed by the background acquisition unit 264 and the response generation unit 265 is described below with reference to FIG. 6. FIG. 6 is a sequence diagram illustrating a second example of an operation of the information processing system 100 according to the first embodiment. FIG. 6 illustrates an operation of the information processing system 100 in which the background acquisition unit 264 acquires background information and the response generation unit 265 generates answer data.

The processing of steps S601 and S602 of FIG. 6 is substantially the same as the processing of steps S501 and S502 of FIG. 5, and thus description thereof is omitted.

In response to the input reception unit 261 of the information processing apparatus 200 receiving input of the authentication information, in step S603, the attribute acquisition unit 263 of the information processing apparatus 200 acquires attribute information of the user identified by the user ID included in the authentication information.

At this time, in a case where the attribute storage unit 240 stores attribute information associated with the user ID, the attribute acquisition unit 263 of the information processing apparatus 200 reads the attribute information from the attribute storage unit 240. In a case where the attribute storage unit 240 does not store the attribute information, the attribute acquisition unit 263 performs the processing illustrated in FIG. 5 to acquire the attribute information.

In step S604, the input reception unit 340 of the terminal apparatus 300 receives input of question data by the user. In step S605, the communication control unit 360 of the terminal apparatus 300 transmits the question data to the information processing apparatus 200.

In response to the input reception unit 261 of the information processing apparatus 200 receiving input of the question data, in step S606, the background acquisition unit 264 of the information processing apparatus 200 generates a prompt requesting estimation of the background of the user based on the attribute information acquired by the attribute acquisition unit 263. In step S607, the background acquisition unit 264 transmits the generated prompt to the server apparatus 400. Details of the prompt generated by the background acquisition unit 264 will be described below.

In response to receipt of the prompt generated by the background acquisition unit 264, in step S608, the input unit 420 of the server apparatus 400 inputs the prompt to the large language model 411, and the output unit 430 of the server apparatus 400 transmits information output from the large language model 411 and indicating an estimation result of the background of the user to the information processing apparatus 200.

The background acquisition unit 264 of the information processing apparatus 200 acquires the information received from the server apparatus 400 as background information indicating user-specific background. In step S609, the response generation unit 265 of the information processing apparatus 200 generates a prompt requesting generation of an answer to which specific optimization for the user is applied, based on the background information acquired in step S608. In step S610, the response generation unit 265 transmits the generated prompt to the server apparatus 400. Details of the prompt generated by the response generation unit 265 will be described below.

In response to receipt of the prompt generated by the response generation unit 265, in step S611, the input unit 420 of the server apparatus 400 inputs the prompt to the large language model 411, and the output unit 430 of the server apparatus 400 transmits answer data output from the large language model 411 to the information processing apparatus 200.

In step S612, the response generation unit 265 of the information processing apparatus 200 transmits the answer data received from the server apparatus 400 to the terminal apparatus 300. The response generation unit 265 stores the received answer data and the question data received in step S605 in the communication history storage unit 230 as communication history information in association with the user ID.

In response to receipt of the answer data from the information processing apparatus 200, in step S613, the display control unit 350 of the terminal apparatus 300 displays the answer data on the display 318.

In the present embodiment, accordingly, merely by inputting question data, the user can obtain answer data that takes into account the user-specific background inferred based on the specific attribute information of the user. In the present embodiment, furthermore, since answer data is generated using background information inferred from the attribute information of the user even when, for example, a question indicated by question data input by the user is an abstract question, answer data intended by the user can be generated with higher probability. As a result, the accuracy of an answer to the question can be improved.

In the present embodiment, processing performed by the attribute acquisition unit 263 to acquire attribute information is separate from processing performed by the background acquisition unit 264 to acquire background information. Accordingly, in the present embodiment, a prompt explicitly requesting estimation of background information based on attribute information is input to the server apparatus 400, and thus accuracy of estimation of background information can be improved.

In the present embodiment, processing is performed in a distributed manner as described above, thereby reducing the number of tokens input at one time to the generative AI implemented by the server apparatus 400. According to the present embodiment, therefore, it is possible to utilize even a generative AI having a small maximum token limit.

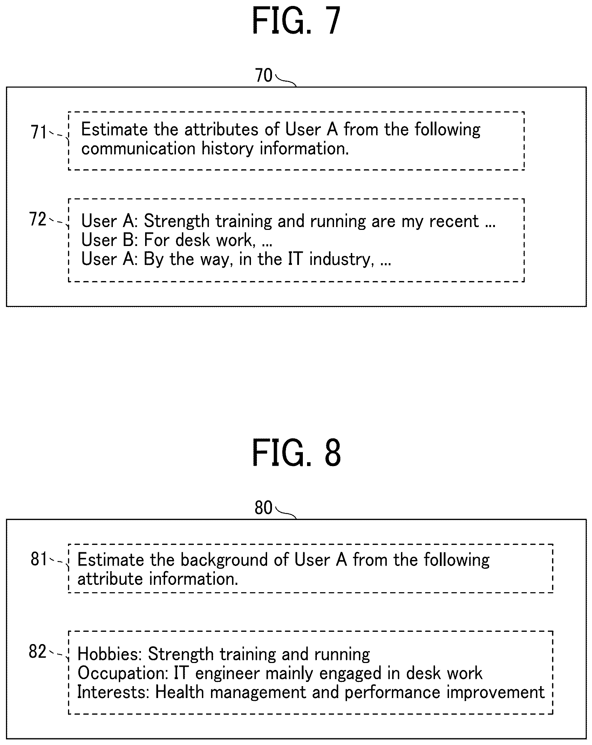

Prompts generated in the information processing apparatus 200 are described below with reference to FIGs. 7 to 9.

FIG. 7 is a diagram illustrating an example of a prompt generated by the attribute acquisition unit 263. A prompt 70 illustrated in FIG. 7 is an example of the prompt generated by the attribute acquisition unit 263 in step S504 of FIG. 5.

The prompt 70 illustrated in FIG. 7 includes text data 71 and text data 72. The text data 71 is text data requesting estimation of the user's attributes based on the communication history information. The text data 72 is communication information included in the communication history information extracted in step S503 of FIG. 5.

By generating such a prompt and transmitting the prompt to the server apparatus 400, the attribute acquisition unit 263 of the present embodiment can acquire the user's attribute information inferred from the extracted communication history information.

FIG. 8 is a diagram illustrating an example of a prompt generated by the background acquisition unit 264. A prompt 80 illustrated in FIG. 8 is an example of a prompt generated by the background acquisition unit 264 in step S606 of FIG. 6.

The prompt 80 includes text data 81 and text data 82. The text data 81 is text data requesting inference of the background of the user based on the attribute information of the user. The text data 82 is text data indicating the attribute information acquired in step S603 of FIG. 6. In the example illustrated in FIG. 8, attribute information of the user is acquired. The attribute information indicates that the hobby is strength training, that the occupation is an IT engineer mainly engaged in desk work, and that the interests are health management and performance improvement.

By generating such a prompt and transmitting the prompt to the server apparatus 400, the background acquisition unit 264 of the present embodiment can acquire background information indicating user-specific background, based on the attribute information.

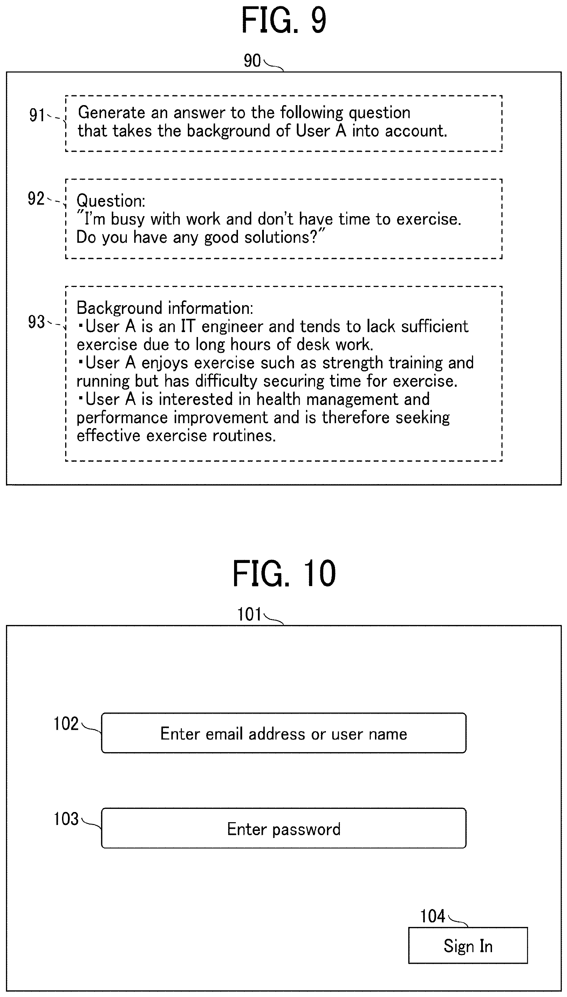

FIG. 9 is a diagram illustrating an example of a prompt generated by the response generation unit 265. A prompt 90 illustrated in FIG. 9 is an example of a prompt generated by the response generation unit 265 in step S609 of FIG. 6.

The prompt 90 includes text data 91, text data 92, and text data 93. The text data 91 is text data requesting generation of an answer to a question by taking into account the background of the user. In other words, the text data 91 is text data requesting generation of an answer to which specific optimization for the user is applied based on the background of the user.

The text data 92 is question data input to the information processing apparatus 200 in step S605 of FIG. 6. The text data 93 indicates background information acquired by the background acquisition unit 264 in step S608 of FIG. 6.

In the example illustrated in FIG. 9, user-specific background information is acquired. The user-specific background information indicates that the user is an IT engineer and tends to lack sufficient exercise due to long hours of desk work, that the user enjoys exercise such as strength training and running but has difficulty securing time for exercise, and that the user is interested in health management and performance improvement and is therefore seeking effective exercise routines.

As described above, the response generation unit 265 of the present embodiment generates a prompt requesting generation of an answer to a question such that the prompt includes the user-specific background information, thereby acquiring answer data based on user-specific background.

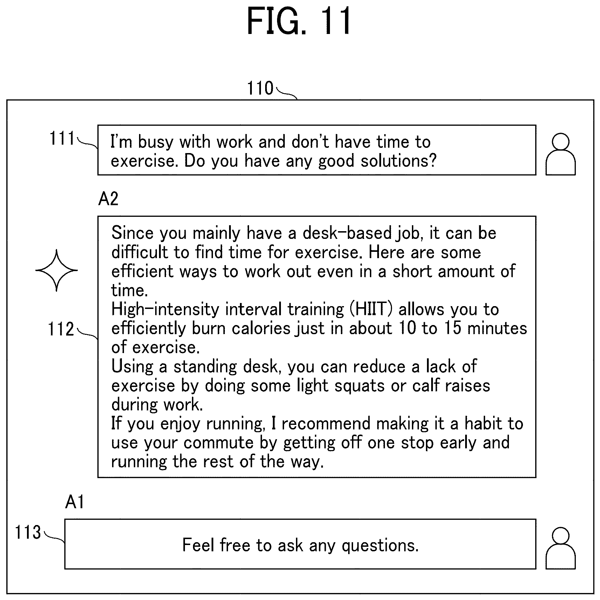

Example displays on the terminal apparatus 300 are described below with reference to FIGs. 10 and 11. FIG. 10 is a first diagram illustrating an example display on the terminal apparatus 300 according to the first embodiment.

A screen 101 illustrated in FIG. 10 is an example of an authentication information input screen displayed on the terminal apparatus 300 in step S501 of FIG. 5 and step S601 of FIG. 6.

The screen 101 includes input fields 102 and 103 and an operation button 104. The input field 102 is an input field for inputting a user ID, and the input field 103 is an input field for inputting a password.

The operation button 104 is an operation button for transmitting authentication information input in the input fields 102 and 103 to the information processing apparatus 200.

FIG. 11 is a second diagram illustrating an example display on the terminal apparatus 300 according to the first embodiment. A screen 110 illustrated in FIG. 11 is an example of a screen displayed on the terminal apparatus 300 in step S613 of FIG. 6.

The screen 110 includes display areas 111 and 112 and an input field 113. In the example illustrated in FIG. 11, the display area 111 displays question data input by the user in step S604 of FIG. 6. The display area 112 displays answer data acquired by the information processing apparatus 200 from the server apparatus 400 in step S611.

In the example illustrated in FIG. 11, the question indicated by the question data displayed in the display area 111 is "I'm busy with work and don't have time to exercise. Do you have any good solutions?" In response to the question, the answer indicated by the answer data transmitted from the information processing apparatus 200 to the terminal apparatus 300 includes text such as "Since you mainly have a desk-based job, it can be difficult to find time for exercise. Here are some efficient ways to work out even in a short amount of time", and "If you enjoy running, I recommend making it a habit to use your commute by getting off one stop early and running the rest of the way".

The answer indicates that the answer takes into account user-specific background, including a desk-based job, difficulty in securing time for exercise, interests in health management and performance improvement, and enjoying running. In other words, the answer indicates that specific optimization for the user has been applied to the answer based on the background of the user.

As described above, according to the present embodiment, an answer to a question is generated using background information inferred from the user's attribute information obtained from communication history information and is presented. According to the present embodiment, therefore, it is possible to output answer data based on the user's individual circumstances.

### Second Embodiment

A second embodiment of the present disclosure is described below with reference to the corresponding drawings. The second embodiment differs from the first embodiment in that background information is acquired in accordance with the content of a question of a user to generate answer data and in that information in an external server is referred to as appropriate. In the following description of the second embodiment, differences from the first embodiment are described. The same reference numerals are given to the same or corresponding functions or configurations as those of the first embodiment, and redundant descriptions thereof are omitted or simplified appropriately.

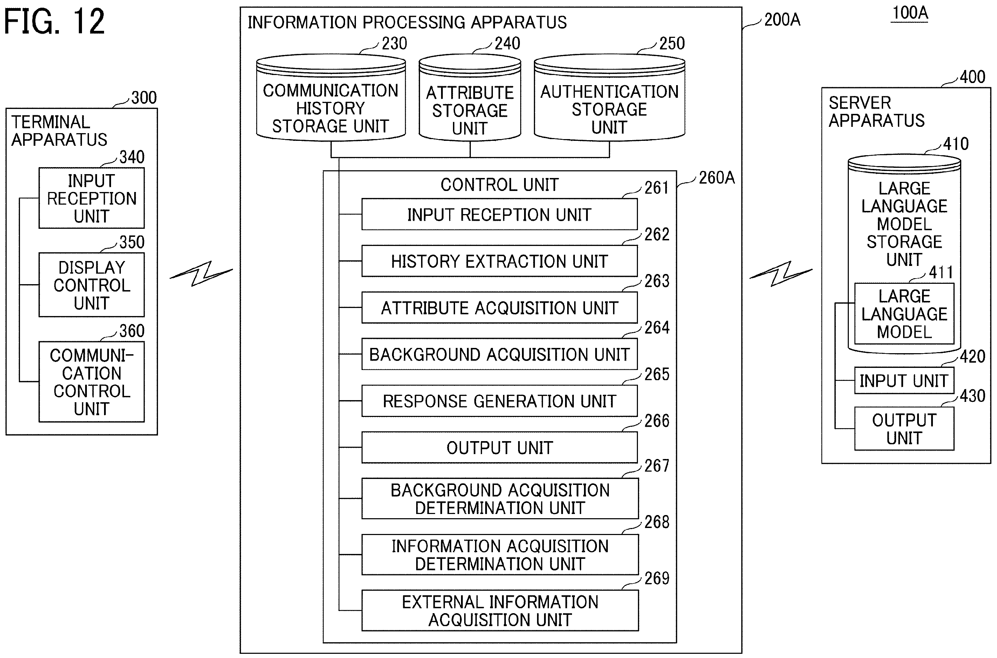

FIG. 12 is a diagram illustrating functions of each apparatus included in an information processing system according to the second embodiment.

In an information processing system 100A of the present embodiment, an information processing apparatus 200A includes a control unit 260A. The control unit 260A includes the input reception unit 261, the history extraction unit 262, the attribute acquisition unit 263, the background acquisition unit 264, the response generation unit 265, the output unit 266, a background acquisition determination unit 267, an information acquisition determination unit 268, and an external information acquisition unit 269.

The background acquisition determination unit 267 determines, based on the question data received by the input reception unit 261, whether attribute information and background information are to be acquired to generate answer data. The information acquisition determination unit 268 determines whether information from an external server 500 described below is to be acquired to generate answer data for the question data. When the information acquisition determination unit 268 determines that information is to be acquired, the external information acquisition unit 269 acquires information from the external server 500.

In the present embodiment, the external server 500 is, for example, a server on the Internet that provides information in response to a request from a third party. Specifically, for example, the external server 500 may be a server that provides weather information, a server that provides information indicating operation status of public transportation, or the like.

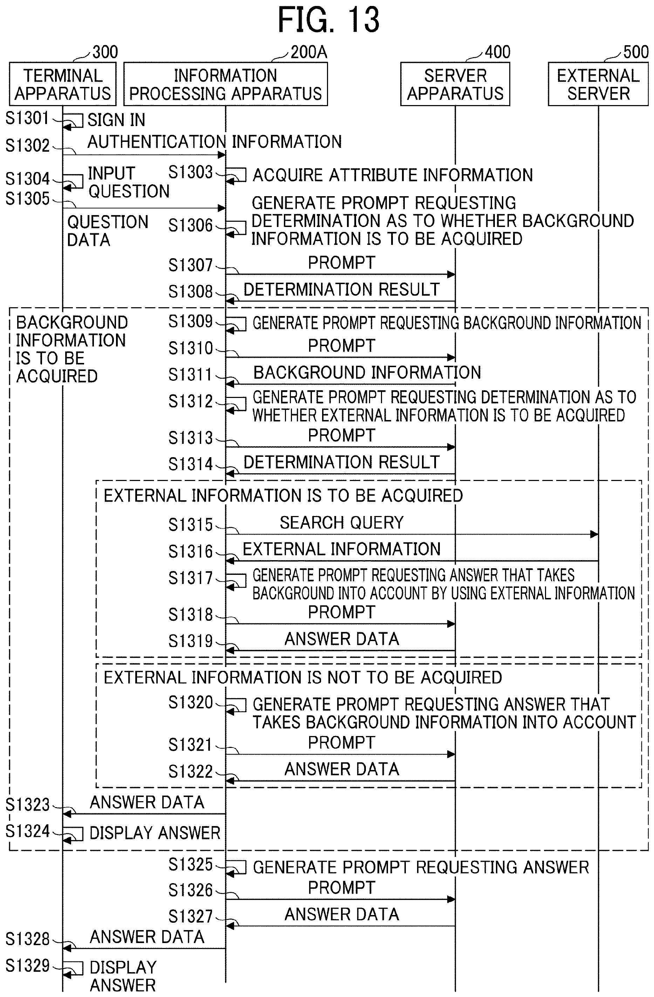

An operation of the information processing system 100A of the present embodiment is described below with reference to FIG. 13. FIG. 13 is a sequence diagram illustrating an operation of the information processing system 100A according to the second embodiment.

The processing of steps S1301 to S1305 of FIG. 13 is substantially the same as the processing of steps S601 to S605 of FIG. 6, and thus description thereof is omitted.

In response to input of question data, in the control unit 260A of the information processing apparatus 200A, in step S1306, the background acquisition determination unit 267 generates a prompt requesting determination as to whether attribute information and background information are to be acquired to generate answer data. In step S1307, the background acquisition determination unit 267 transmits the generated prompt to the server apparatus 400.

In response to receipt of the prompt generated by the background acquisition determination unit 267, in step S1308, the input unit 420 of the server apparatus 400 inputs the prompt to the large language model 411, and the output unit 430 of the server apparatus 400 transmits determination result information output from the large language model 411 and indicating a determination result as to whether background information is to be acquired to the information processing apparatus 200A.

In the present embodiment, for example, when the question data includes content indicating the attributes or the background of the user, it is determined that background information is not to be acquired.

When the determination result indicated by the determination result information indicates that attribute information and background information are not to be acquired, the control unit 260A of the information processing apparatus 200A proceeds to step S1325 described below.

When the determination result indicated by the determination result information indicates that attribute information and background information are to be acquired, the control unit 260A of the information processing apparatus 200A proceeds to step S1309. The processing of steps S1309 to S1311 of FIG. 13 is substantially the same as the processing of steps S606 to S608 of FIG. 6, and thus description thereof is omitted.

In response to background information being acquired, in the control unit 260A of the information processing apparatus 200A, in step S1312, the information acquisition determination unit 268 generates a prompt requesting determination as to whether external information is to be acquired from the external server 500 to generate answer data. In step S1313, the information acquisition determination unit 268 transmits the generated prompt to the server apparatus 400.

In response to receipt of the prompt generated by the information acquisition determination unit 268, in step S1314, the input unit 420 of the server apparatus 400 inputs the prompt to the large language model 411, and the output unit 430 of the server apparatus 400 transmits determination result information output from the large language model 411 and indicating a determination result as to whether external information is to be acquired to the information processing apparatus 200A.

When it is determined that external information is to be acquired, the server apparatus 400 outputs determination result information to the information processing apparatus 200A. The determination result information includes information for identifying the external server 500 from which the external information is acquired, and a search query for acquiring the external information.

When the determination result information acquired in step S1314 indicates that the external information is not to be acquired, the control unit 260A of the information processing apparatus 200A proceeds to step S1320 described below.

When the determination result information acquired in step S1314 includes information for identifying the external server 500 and a search query for acquiring the external information, in the control unit 260A of the information processing apparatus 200A, in step S1315, the external information acquisition unit 269 transmits a search request using the search query included in the determination result information to the identified external server 500.

In step S1316, the external information acquisition unit 269 acquires a search result based on the search query from the external server 500 as the external information.

In the control unit 260A of the information processing apparatus 200A, in step S1317, the response generation unit 265 uses the external information acquired in step S1316 to generate a prompt requesting generation of answer data by taking into account the background indicated by the background information acquired in step S1311. In step S1318, the response generation unit 265 transmits the generated prompt to the server apparatus 400.

In response to receipt of the prompt generated by the response generation unit 265, in step S1319, the input unit 420 of the server apparatus 400 inputs the prompt to the large language model 411, and the output unit 430 of the server apparatus 400 transmits to the information processing apparatus 200A answer data that is output from the large language model 411 and takes into account the background of the user and the external information. Subsequently, the information processing apparatus 200A proceeds to step S1323 described below.

The control unit 260A of the information processing apparatus 200A proceeds to step S1320. The processing of steps S1320 to S1324 of FIG. 13 is substantially the same as the processing of steps S609 to S613 of FIG. 6, and thus description thereof is omitted.

When the determination result indicated by the determination result information transmitted in step S1308 indicates that background information is not to be acquired, in the control unit 260A of the information processing apparatus 200A, in step S1325, the response generation unit 265 generates a prompt requesting generation of answer data for the question data input in step S1305. In step S1326, the response generation unit 265 transmits the generated prompt to the server apparatus 400.

In response to receipt of the prompt generated by the response generation unit 265, in step S1327, the input unit 420 of the server apparatus 400 inputs the prompt to the large language model 411, and the output unit 430 of the server apparatus 400 transmits answer data output from the large language model 411 to the information processing apparatus 200A.

In step S1328, the information processing apparatus 200A transmits the acquired answer data to the terminal apparatus 300. In response to the communication control unit 360 of the terminal apparatus 300 receiving the answer data, in step S1329, the display control unit 350 of the terminal apparatus 300 displays the answer data on the display 318.

In the present embodiment, as described above, it is determined whether background information is to be acquired, based on the content of question data input by the user. According to the present embodiment, therefore, when a question of the user is a specific question such as a question including the user's attribute information or the user-specific background information, it is possible to skip the process of acquiring background information and promptly output answer data to the user.

In the present embodiment, in accordance with the content of the question of the user, external information provided by the external server 500 is acquired and used to generate answer data. According to the present embodiment, therefore, it is possible to output answer data using external information in accordance with the content of the question indicated by the question data, and improve accuracy of an answer to the question.

### Third Embodiment

A third embodiment of the present disclosure is described below with reference to the corresponding drawings. The third embodiment differs from the first embodiment in that items to be extracted as attributes are set by the user. In the following description of the third embodiment, differences from the first embodiment are described. The same reference numerals are given to the same or corresponding functions or configurations as those of the first embodiment, and redundant descriptions thereof are omitted or simplified appropriately.

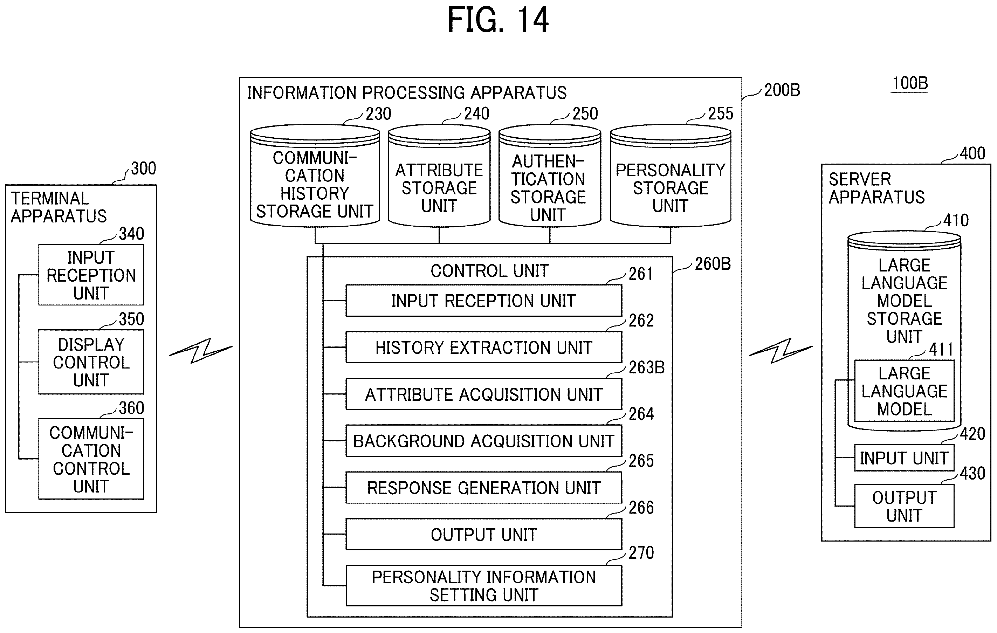

FIG. 14 is a diagram illustrating functions of each apparatus included in an information processing system according to the third embodiment.

In an information processing system 100B of the present embodiment, an information processing apparatus 200B includes the communication history storage unit 230, the attribute storage unit 240, the authentication storage unit 250, a personality storage unit 255, and a control unit 260B.

The personality storage unit 255 stores personality information indicating, for example, items to be extracted as attribute information of the user. The personality information is information in which information indicating items to be extracted as attribute information is associated with a type of attribute information extracted in accordance with the personality information.

The control unit 260B includes the input reception unit 261, the history extraction unit 262, an attribute acquisition unit 263B, the background acquisition unit 264, the response generation unit 265, the output unit 266, and a personality information setting unit 270.

The attribute acquisition unit 263B acquires attribute information of the user, based on the communication history information extracted by the history extraction unit 262 and the personality information stored in the personality storage unit 255. The personality information setting unit 270 causes a screen for creating personality information to be displayed on the terminal apparatus 300, and stores personality information input through the terminal apparatus 300 in the personality storage unit 255.

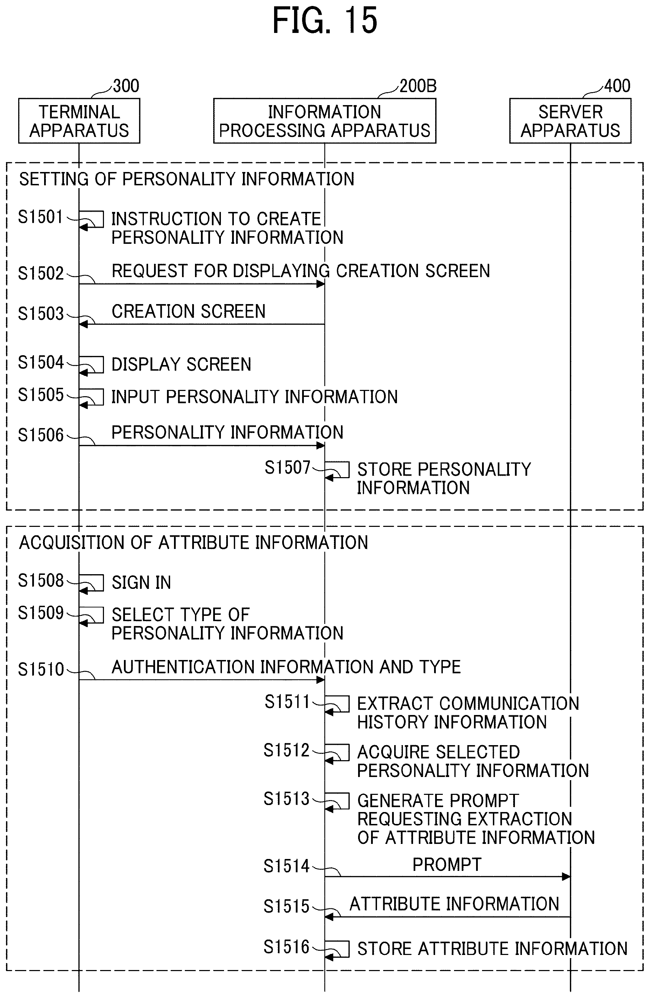

An operation of the information processing system 100B of the present embodiment is described below with reference to FIG. 15. FIG. 15 is a sequence diagram illustrating an operation of the information processing system 100B according to the third embodiment. FIG. 15 illustrates the operation of the information processing system 100B for creating personality information and the operation of the information processing system 100B for acquiring attribute information using the personality information. First, an operation of setting personality information is described.

In step S1501, the input reception unit 340 of the terminal apparatus 300 receives an operation instruction to create personality information. In step S1502, the communication control unit 360 of the terminal apparatus 300 transmits a request for displaying a creation screen for creating personality information to the information processing apparatus 200B.

In response to the input reception unit 261 of the information processing apparatus 200B receiving the request for displaying the creation screen, in step S1503, the personality information setting unit 270 of the information processing apparatus 200B transmits an instruction for displaying the creation screen for creating personality information to the terminal apparatus 300.

In response to the instruction for displaying the creation screen, in step S1504, the display control unit 350 of the terminal apparatus 300 causes the display 318 to display the creation screen for creating personality information. Details of the creation screen for creating personality information will be described below.

In step S1505, the input reception unit 340 of the terminal apparatus 300 receives input of personality information. In step S1506, the communication control unit 360 of the terminal apparatus 300 transmits the input personality information to the information processing apparatus 200B.

In response to the input reception unit 261 of the information processing apparatus 200B receiving input of the personality information, in step S1507, the personality information setting unit 270 of the information processing apparatus 200B stores the personality information in the personality storage unit 255.

In the present embodiment, personality information is stored in the personality storage unit 255 by the personality information setting unit 270, and accordingly, the personality information is set.

The process for creating personality information has been described above. The process for acquiring attribute information using the personality information stored in the personality storage unit 255 is described below.

In step S1508, the input reception unit 340 of the terminal apparatus 300 receives a sign-in operation performed by the user. In step S1509, the input reception unit 340 of the terminal apparatus 300 receives selection of a type of personality information. In the present embodiment, the authentication information input screen (see FIG. 10) displayed on the terminal apparatus 300 in step S1508 may display an operation button or the like for selecting personality information. For example, in response to the operation button being selected, a list of types of personality information stored in the personality storage unit 255 is displayed on the terminal apparatus 300.

In response to a type of personality information being selected, in step S1510, the communication control unit 360 of the terminal apparatus 300 transmits information indicating the type of personality information together with authentication information to the information processing apparatus 200B.

In response to the input reception unit 261 of the information processing apparatus 200B receiving the authentication information and the type of personality information, in step S1511, the history extraction unit 262 of the information processing apparatus 200B acquires communication history information from the communication history storage unit 230, based on the user ID included in the authentication information.

In step S 1512, the attribute acquisition unit 263B of the information processing apparatus 200B acquires, based on the type of personality information acquired in step S1510, personality information corresponding to the type from the personality storage unit 255.

In step S1513, the attribute acquisition unit 263B generates a prompt requesting estimation of the attributes of the user based on the communication history information acquired in step S1511 and the personality information acquired in step S1512. In step S1514, the attribute acquisition unit 263B transmits the generated prompt to the server apparatus 400.

In response to receipt of the prompt generated by the attribute acquisition unit 263B, in step S1515, the input unit 420 of the server apparatus 400 inputs the prompt to the large language model 411, and the output unit 430 of the server apparatus 400 transmits the user's attribute information output from the large language model 411 and estimated based on the communication history information and the personality information to the information processing apparatus 200B. In step S1516, in the information processing apparatus 200B, the attribute information acquired from the server apparatus 400 is stored in the attribute storage unit 240 in association with the user ID.

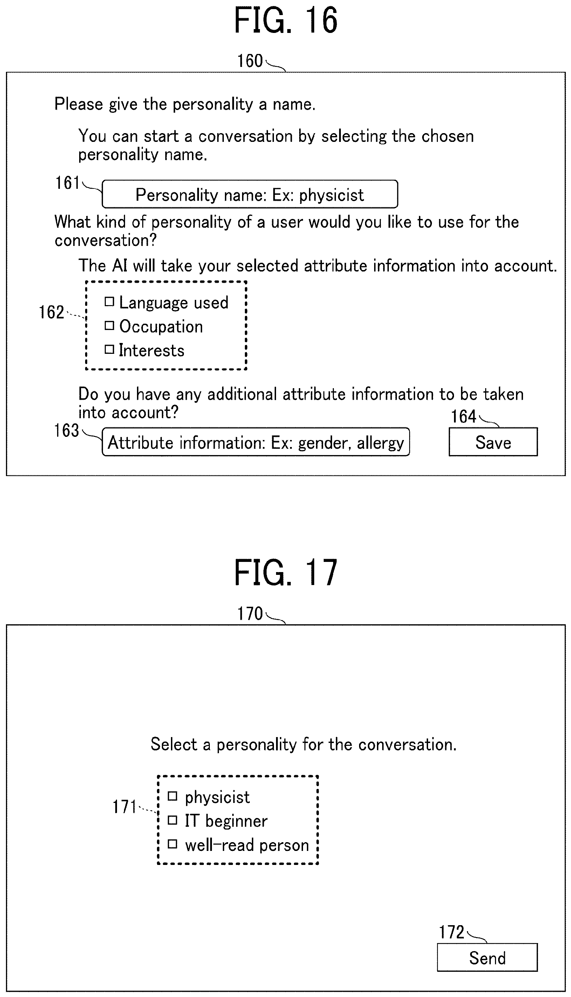

Example displays on the terminal apparatus 300 are described below with reference to FIGs. 16 and 17. FIG. 16 is a first diagram illustrating an example display on the terminal apparatus 300 according to the third embodiment. A screen 160 illustrated in FIG. 16 is an example of a personality information creation screen displayed on the terminal apparatus 300 in step S1504 of FIG. 15.

The screen 160 includes an input field 161, a selection field 162, an input field 163, and an operation button 164. The input field 161 is an input field for inputting a type of personality information. The selection field 162 is a selection field for selecting items to be extracted. The input field 163 is an input field for inputting items to be extracted by a user who creates personality information, in addition to items displayed in the selection field 162.

The items displayed as selectable in the selection field 162 are default items predetermined in advance. In the present embodiment, the items displayed as selectable in the selection field 162 may be acquired as attribute information in order to acquire attribute information without using personality information.

The operation button 164 is an operation button for storing results of input and selection for the input field 161, the selection field 162, and the input field 163 in the information processing apparatus 200B as personality information. In response to selection of the operation button 164 after input and selection for the input field 161, the selection field 162, and the input field 163 are completed, personality information including the type input in the input field 161, items selected in the selection field 162, and items input in the input field 163 in association with each other is transmitted from the terminal apparatus 300 to the information processing apparatus 200B.

FIG. 17 is a second diagram illustrating an example display on the terminal apparatus 300 according to the third embodiment. A screen 170 illustrated in FIG. 17 is an example of a screen displayed on the terminal apparatus 300 in step S1509 of FIG. 15.

The screen 170 includes a display area 171 and an operation button 172. The display area 171 displays a list of types of personality information stored in the personality storage unit 255 in association with operation components for selecting respective types.

The operation button 172 is an operation button for transmitting a selected type among the types of personality information displayed in the display area 171 to the information processing apparatus 200B together with the authentication information.

For example, the type "physicist" is selected in the display area 171, and thereafter the operation button 172 is selected. In response to the selection of the operation button 172, the type "physicist" is transmitted from the terminal apparatus 300 to the information processing apparatus 200B together with the authentication information.

In the information processing apparatus 200B, the attribute acquisition unit 263B generates, based on the communication history information extracted based on the user ID included in the authentication information and items indicated by the personality information of the type "physicist" acquired from the personality storage unit 255, a prompt requesting estimation of the attributes of the user, and transmits the prompt to the server apparatus 400.

In the present embodiment, as described above, personality information indicating items to be extracted as attribute information can be created in advance and stored in the personality storage unit 255. According to the present embodiment, therefore, the user can explicitly set, in the information processing system 100B, the user's attribute information that the user wishes to be taken into account. In the present embodiment, accordingly, it is possible for the information processing system 100B to output answer data that takes into account the user's individual circumstances desired by the user.

Each of the functions of the embodiments described above may be implemented by one or more processing circuits or circuitry. In this specification, the "processing circuit or circuitry" in the present specification includes a programmed processor to execute each function by software, such as a processor implemented by an electronic circuit, and devices, such as an application-specific integrated circuit (ASIC), a digital signal processor (DSP), a field programmable gate array (FPGA), and conventional circuit modules designed to perform the recited functions.

The group of apparatuses or devices described in the above-described embodiments is merely one example of multiple computing environments for implementing the embodiments disclosed herein.

In some embodiments, the information processing apparatus 200 includes multiple computing devices, such as a server cluster. The multiple computing devices are configured to communicate with one another through any type of communication link, including a network, a shared memory, etc., and perform the processes disclosed herein. In substantially the same manner, for example, the information processing apparatus 200 includes such multiple computing devices configured to communicate with one another.

Further, the information processing apparatus 200 may be configured to share the processing steps disclosed herein in various combinations. For example, the processes executed by one or more functional units may be performed by any one of the computing devices operating as the information processing apparatus 200. Similarly, the functions executed by one or more functional units may be performed by any one of the computing devices operating as the information processing apparatus 200. The functional elements of the information processing apparatus 200 may be integrated into one server apparatus or may be divided into a plurality of apparatuses.

The information processing apparatus 200 may be any apparatus having a communication function. Other examples of the information processing apparatus 200 include, but are not limited to, an output device such as a Projector (PJ), an Interactive White Board (a white board having an electronic whiteboard function capable of mutual communication (IWB)), and a digital signage, a Head Up Display (HUD) device, an industrial machine, an imaging device, a sound collecting device, a medical device, a network home appliance, an automobile (connected car), a notebook Personal Computer (PC), a mobile phone, a smartphone, a tablet terminal, a game console, a Personal Digital Assistant (PDA), a digital camera, a wearable PC or a desktop PC.

Aspects of the present disclosure are, for example, as follows.

### Aspect 1

In Aspect 1, an information processing apparatus includes an input reception unit. The input reception unit receives input of input data input by a user via a terminal apparatus. The information processing apparatus further includes an output unit. The output unit outputs response data according to attribute information of the user by using the attribute information, the attribute information being acquired based on the input data and communication history information associated with the user.

### Aspect 2

According to Aspect 2, the information processing apparatus of Aspect 1 further includes a background acquisition unit and a response generation unit. The background acquisition unit generates, based on the attribute information, a prompt requesting inference of a background of the user, outputs the prompt to a large language model, and acquires an estimation result output from the large language model as background information indicating the background of the user.

The response generation unit generates, based on the background information and the input data, a prompt requesting creation of response data according to the attribute information of the user, outputs the prompt to the large language model, and acquires the response data output from the large language model.

### Aspect 3

According to Aspect 3, the information processing apparatus of Aspect 1 or Aspect 2 further includes an attribute acquisition unit. The attribute acquisition unit generates a prompt requesting estimation of an attribute of the user based on the communication history information associated with the user, outputs the prompt to a large language model, and acquires an estimation result output from the large language model as the attribute information.

### Aspect 4

According to Aspect 4, the information processing apparatus of Aspect 3 further includes a personality information setting unit. The personality information setting unit sets personality information in which an item extracted as the attribute information is associated with a type of the attribute information.

The personality information setting unit causes a screen for creating the personality information to be displayed on the terminal apparatus, acquires the personality information input on the screen displayed on the terminal apparatus, and stores the personality information in a storage unit.

### Aspect 5

According to Aspect 5, in the information processing apparatus of Aspect 4, the input reception unit receives input of a type of the personality information.

The attribute acquisition unit generates a prompt requesting estimation of an attribute of the user based on the communication history information associated with the user and the personality information corresponding to the type whose input is received by the input reception unit, outputs the prompt to the large language model, and acquires an estimation result output from the large language model as the attribute information.

### Aspect 6

According to Aspect 6, the information processing apparatus of Aspect 3 or Aspect 4 further includes a background acquisition determination unit. The background acquisition determination unit generates, based on the input data, a prompt requesting determination as to whether the attribute information is to be acquired, outputs the prompt to the large language model, and acquires a determination result output from the large language model.

The attribute acquisition unit acquires the attribute information based on a determination in the determination result that the attribute information is to be acquired.

### Aspect 7

According to Aspect 7, the information processing apparatus of any one of Aspects 2 to 6 further includes an information acquisition determination unit and an external information acquisition unit. The information acquisition determination unit generates, based on the input data and the background information, a prompt requesting determination as to whether external information is to be acquired from an external server, outputs the prompt to the large language model, and acquires a determination result output from the large language model.

When the determination result acquired by the information acquisition determination unit includes information for identifying the external server and a search query for acquiring the external information, the external information acquisition unit performs a search using the search query on the identified external server to acquire the external information.

The response generation unit generates the prompt requesting creation of the response data such that the prompt includes the external information acquired by the external information acquisition unit.

### Aspect 8

In Aspect 8, an information processing method performed by an information processing apparatus includes receiving input of input data input by a user via a terminal apparatus; and outputting response data according to attribute information of the user by using the attribute information, the attribute information being acquired based on the input data and communication history information associated with the user.

### Aspect 9

In Aspect 9, a program causes an information processing apparatus to execute a process including receiving input of input data input by a user via a terminal apparatus; and outputting response data according to attribute information of the user by using the attribute information, the attribute information being acquired based on the input data and communication history information associated with the user.

### Aspect 10

In Aspect 10, an information processing system includes an information processing apparatus and a terminal apparatus communicable with the information processing apparatus via a network.

The information processing apparatus includes an input reception unit and an output unit. The input reception unit receives input of input data input by a user via the terminal apparatus. The output unit outputs response data according to attribute information of the user by using the attribute information, the attribute information being acquired based on the input data and communication history information associated with the user.

The terminal apparatus includes a display control unit. The display control unit causes a display unit to display the response data output from the information processing apparatus.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing apparatus comprising:
an input reception unit (201, 261) configured to receive input of input data input by a user via a terminal apparatus; and
an output unit (201, 266) configured to output response data according to attribute information of the user by using the attribute information, the attribute information being acquired based on the input data and communication history information associated with the user.

2. The information processing apparatus according to claim 1, further comprising:
a background acquisition unit (201, 264) configured to:
generate, based on the attribute information, a prompt requesting inference of a background of the user;
output the prompt to a large language model; and
acquire an estimation result output from the large language model as background information indicating the background of the user; and
a response generation unit (201, 265) configured to:
generate, based on the background information and the input data, a prompt requesting creation of response data according to the attribute information of the user;
output the prompt to the large language model; and
acquire the response data output from the large language model.

3. The information processing apparatus according to claim 1 or 2, further comprising an attribute acquisition unit (201, 263, 263B) configured to:
generate a prompt requesting estimation of an attribute of the user based on the communication history information associated with the user;
output the prompt to a large language model; and
acquire an estimation result output from the large language model as the attribute information.

4. The information processing apparatus according to claim 3, further comprising a personality information setting unit (201, 270) configured to set personality information in which an item extracted as the attribute information is associated with a type of the attribute information, wherein
the personality information setting unit (201, 270) is configured to:
cause the terminal apparatus to display a screen for creating the personality information;
acquire the personality information input on the screen displayed on the terminal apparatus; and
store the personality information in a storage unit (204, 255).

5. The information processing apparatus according to claim 4, wherein
the input reception unit (201, 261) is configured to receive input of a type of the personality information, and
the attribute acquisition unit (201, 263B) is configured to:
generate a prompt requesting estimation of an attribute of the user based on the communication history information associated with the user and the personality information corresponding to the type whose input is received by the input reception unit (201, 261);
output the prompt to the large language model; and
acquire an estimation result output from the large language model as the attribute information.

6. The information processing apparatus according to claim 3 or 4, further comprising a background acquisition determination unit (201, 267) configured to:
generate, based on the input data, a prompt requesting determination as to whether the attribute information is to be acquired;
output the prompt to the large language model; and
acquire a determination result output from the large language model, wherein
the attribute acquisition unit (201, 263, 263B) is configured to acquire the attribute information when the determination result indicates that the attribute information is to be acquired.

7. The information processing apparatus according to any one of claims 2 to 6, further comprising:
an information acquisition determination unit (201, 268) configured to:
generate, based on the input data and the background information, a prompt requesting determination as to whether external information is to be acquired from an external server;
output the prompt to the large language model; and
acquire a determination result output from the large language model; and
an external information acquisition unit (201, 269) configured to, when the determination result acquired by the information acquisition determination unit (201, 268) includes information for identifying the external server and a search query for acquiring the external information, perform a search using the search query on the identified external server to acquire the external information, wherein
the response generation unit (201, 265) is configured to generate the prompt requesting creation of the response data such that the prompt includes the external information acquired by the external information acquisition unit (201, 269).

8. An information processing method performed by an information processing apparatus, the information processing method comprising:
receiving (S605, S1305) input of input data input by a user via a terminal apparatus; and
outputting (S612, S1328) response data according to attribute information of the user by using the attribute information, the attribute information being acquired based on the input data and communication history information associated with the user.

9. A carrier means carrying computer-readable codes for controlling a computer to carry out the method according to claim 8.

10. An information processing system comprising:
an information processing apparatus (200, 200A, 200B); and
a terminal apparatus (300) communicably connected with the information processing apparatus (200, 200A, 200B) via a network, wherein
the information processing apparatus (200, 200A, 200B) includes:
an input reception unit (201, 261) configured to receive input of input data input by a user via the terminal apparatus (300); and
an output unit (201, 266) configured to output response data according to attribute information of the user by using the attribute information, the attribute information being acquired based on the input data and communication history information associated with the user, and
the terminal apparatus (300) includes a display control unit (301, 350) configured to cause a display unit (318, 350) to display the response data output from the information processing apparatus (200, 200A, 200B).
